Europäisches Patentamt

European Patent Office

Office européen des brevets

(19)

(11) Veröffentlichungsnummer: **0 350 677**

**A1**

(12)

# EUROPÄISCHE PATENTANMELDUNG

(21) Anmeldenummer: 89111352.4

(51) Int. Cl.⁴: **B01D 53/04**

(22) Anmeldetag: 22.06.89

(30) Priorität: 25.06.88 DE 3821523

(43) Veröffentlichungstag der Anmeldung:
**17.01.90 Patentblatt 90/03**

(84) Benannte Vertragsstaaten:
**DE ES FR GB NL**

(71) Anmelder: **Johann Baptist Rombach GmbH &
Co KG
Hardeckstrasse 2
D-7500 Karlsruhe 21(DE)**

(72) Erfinder: **Schuster, Edelbert
Alb 18**

**D-7517 Waldbronn-Reichenbach(DE)**
Erfinder: **Quandt, Manfred
Waldstrasse 15
D-7513 Stutensee 1(DE)**
Erfinder: **Beger, Kurt
Bahnhofstrasse 44
D-7556 Ötigheim(DE)**

(74) Vertreter: **Durm, Frank et al
Patentanwalt Dr.-Ing. Klaus Durm
Patentanwalt Dipl.-Ing. Frank Durm
Felix-Mottl-Strasse 1a
D-7500 Karlsruhe 21(DE)**

(54) **Vorrichtung zur kontinuierlichen Abtrennung und Wiedergewinnung eines Lösungsmittels aus lösungsmittelhaltiger Abluft.**

(57) Die Reinigung von Abluft, welche Lösungsmittel enthält, geschieht bekanntlich mittels wenigstens zwei abwechselnd betriebenen Adsorptionskammern (3, 3'), in denen ein Adsorbens (6, 6') während einer Adsorptionsphase von der lösungsmittelhaltigen Abluft durchströmt und während einer Desorptionsphase regeneriert wird. Das Adsorbens (6, 6') wird während der Adsorptionsphase gekühlt und während der Desorptionsphase aufgeheizt. Das gleichzeitige Anlegen eines Vakuums setzt den Siedepunkt des Lösungsmittels bei der Desorption herab. - Es soll eine konstruktiv einfach aufgebaute Adsorptionsvorrichtung vorgeschlagen werden, die für alle notwendigen physikalischen Prozesse mit einer einzigen Energieart, nämlich elektrischem Strom, auskommt und besonders wirtschaftlich zu betreiben ist.

Zur abwechselnden Aufheizung und Kühlung des Adsorbens (6, 6') sind in den Adsorptionskammern (3, 3') jeweils Wärmetauscher (7, 7') angeordnet, die während der Adsorptionsphase von einem gekühlten Medium, vorzugsweise Wasser, und während der Desorptionsphase von einem erwärmten Medium, vorzugsweise ebenfalls Wasser, durchströmt sind. Zur Unterstützung des Desorptionsprozesses sind an den Adsorptionskammern (3, 3') spezielle Regelventile (21, 21') vorgesehen, durch die während der Desorptionsphase infolge des angelegten Vakuums Umgebungsluft eindringt und das Adsorbens (6, 6') entgegen der Strömungsrichtung der zu reinigenden Abluft durchströmt. Die Wärmetauscher (7, 7') können sowohl in einen elektrisch beheizten Warmwasser-Kreislauf als auch einen Kühlwasser-Kreislauf eingeschaltet werden. Ein elektrisch angetriebenes Kälteaggregat (29) hält das Kühlwasser auf niedrige Temperatur und kühlt über einen zweiten Kältemittel-Kreislauf (31) zudem einen Kondensator (24), in dem das gasförmige Lösungsmittel während der Desorptionsphase kondensiert.

Anwendungsgebiet ist die Reinigung von Abluft und die Rückgewinnung darin enthaltener Lösungsmittel.

EP 0 350 677 A1

# Vorrichtung zur kontinuierlichen Abtrennung und Wiedergewinnung eines Lösungsmittels aus lösungsmittelhaltiger Abluft

Die Erfindung betrifft eine Vorrichtung zur kontinuierlichen Abtrennung und Wiedergewinnung eines Lösungsmittels aus lösungsmittelhaltiger Abluft. Sie besteht im wesentlichen aus wenigstens zwei abwechselnd betriebenen Desorptionskammern, in denen ein Adsorbens während einer Adsorptionsphase von der lösungsmittelhaltigen Abluft durchströmt und während einer Desorptionsphase regeneriert wird, ferner einem gemeinsamen Abluftkanal, einem im Abluftkanal angeordneten Abluftgebläse, das die Abluft ansaugt und während der Adsorptionsphase durch die Adsorptionskammern fördert, einer Vakuumpumpe zur Erzeugung eines Unterdrucks in den Adsorptionskammern während der Desorptionsphase sowie aus Einrichtungen zur Aufheizung bzw. Kühlung des Adsorbens.

Eine derartige Vorrichtung zur Entfernung mindestens eines Teils des in einem zu reinigenden Gas enthaltenen Wassers und Kohlendioxids ist aus der DE-PS 22 08 467 bekannt. Bei dem mittels dieser vorbekannten Vorrichtung durchgeführten Adsorptionsverfahren durchströmt das zu reinigende Gas in einer Adsorbenskammer zunächst eine trocknende und sodann eine kohlensäureentziehende Adsorbensschicht. In einer Regenerierphase werden die beiden Adsorbensschichten unter Erhitzen von Regeneriergas entgegen der Strömungsrichtung des zu reinigenden Gases in der Adsorptionsphase durchströmt und anschließend gekühlt. In jeder der beiden Adsorbenskammern ist hierzu in der ersten Adsorbensschicht ein als elektrischer Heizwiderstand ausgebildetes Heizorgan eingelassen, während in der zweiten Adsorbensschicht Kühlorgane in Form von Kühlschlangen zur Zirkulation eines Kühlmediums eingelassen sind. Die Regene rierphase erfolgt in drei Etappen, in deren erster unter anderem eine Druckminderung in der Adsorbenskammer stattfindet, in deren zweiter das Adsorbens mit gereinigtem Gas gespült wird und in deren dritter unter fortgesetzter Spülung mit gereinigtem Gas die trocknende Adsorbensschicht abgekühlt wird. Da in einer Adsorbenskammer das Adsorbens in einer ersten Schicht aufgeheizt und gleichzeitig in der anderen Schicht gekühlt werden muß, sind folglich räumlich getrennte und unabhängig voneinander arbeitende Heiz- bzw. Kühlorgane vorgesehen. Diese, aus dem Stand der Technik bekannte Adsorptionsanlage ist speziell für die Abscheidung von Wasser und Kohlendioxid aus einem zu reinigenden Gas bestimmt. Für die Abtrennung eines verdunsteten Lösungsmittels aus Prozeßabluft, wie sie beispielsweise bei der Lackverarbeitung anfällt, ist das in der genannten DE-PS 22 08 467 beschriebene Verfahren bzw. die zugehöri ge Vorrichtung nicht geeignet.

Ein Verfahren zur kontinuierlichen Wiedergewinnung eines Lösungsmittels aus einem lösungsmittelhaltigen Abgas durch Adsorbierung des Lösungsmittels an einem Bett aus Aktivkohle ist aus der DE-PS 2 917 750 bekannt. Die Regenerierung der Aktivkohle geschieht dort mittels eingeblasenen Gases unter gleichzeitiger Aufheizung durch Dampf oder einem anderen geeigneten Wärmemedium. Die als Adsorbens dienende Aktivkohle bildet hier jedoch keine statischen Filterbetten, sondern liegt in Form von in Leitungen strömenden Adsorptionspartikeln vor. Die indirekte Aufheizung der Aktivkohle mit Dampf zum Zwecke der Desorption setzt einen Dampferzeuger voraus, welcher nur mit hohem Energieaufwand betrieben werden kann.

Aufgabe der vorliegenden Erfindung ist die Schaffung einer konstruktiv einfach aufgebauten und somit kostengünstig herstellbaren Vorrichtung zur kontinuierlichen Abtrennung und Wiedergewinnung eines Lösungsmittels aus lösungsmittelhaltiger Abluft, die mit einer einzigen Energieform, nämlich elektrischem Strom, auskommt und sich im Betrieb durch minimalen Energieverbrauch auszeichnet.

Bei der Lösung dieses technischen Problems wird ausgegangen von einer kontinuierlich arbeitenden Abtrenn- und Wiedergewinnungsvorrichtung der eingangs beschriebenen Art; gelöst wird die Aufgabe dadurch, daß in den wenigstens zwei vorhandenen Adsorptionskammern Wärmetauscher angeordnet sind, welche während der Adsorptionsphase von einem gekühltem Medium und während der Desorptionsphase von einem erwärmten Medium durchströmt sind, und dadurch, daß an den Adsorptionskammern Regelventile vorgesehen sind, durch welche während der Desorptionsphase infolge des angelegten Vakuums Umgebungsluft eindringt und das Adsorbens entgegen der Strömungsrichtung der zu reinigenden Abluft durchströmt.

Die lösungsmittelhaltige Abluft, welche beispielsweise bei der Lackverarbeitung, beim Entfetten von Metallen oder bei der Kunststoffverarbeitung anfällt, wird vom Abluftgebläse angesaugt und über den Abluftkanal durch diejenige Adsorptionskammer gedrückt, welche sich gerade in der Adsorptionsphase befindet. Mittels des von einem gekühlten Medium durchströmten Wärmetauschers in der Adsorptionskammer wird das Adsorbens während der Adsorptionsphase gekühlt, was die Adsorptionsfähigkeit des Adsorbens erhöht.

Ist die maximal zulässige Beladung des Adsorbens in der ersten Adsorptionskammer erreicht, wird auf die nächste Adsorptionskammer umgeschaltet. Für die bis dahin aktive erste Adsorptionskammer schließt sich die Desorptionsphase an, bei der unter Umkehrung der physikalischen Bedingungen, insbesondere Temperatur und Druck, das adsorbierte Lösungsmittel wieder aus dem Adsorbens herausgetrieben wird. Während der Desorptionsphase wird durch den in der Adsorptionskammer angeordneten Wärmetauscher, der vorher von einem gekühlten Medium durchströmt war, jetzt ein erwärmtes Medium hindurchgeleitet. Die so bewirkte indirekte Aufheizung des Adsorbens führt zu einer schnelleren Verdampfung des adsorbierten Lösungsmittels. Gleichzeitig wird über die Vakuumpumpe in der Adsorptionskammer ein Vakuum angelegt, welches den Siedepunkt des Lösungs mittels herabsetzt. Zusätzlich wird die Desorption durch das Einleiten eines definierten Volumenstroms von Umgebungsluft über das an der Adsorptionskammer vorgesehene Regelventil unterstützt. Während der Desorptionsphase wird das Adsorbens entgegen der Strömungsrichtung der zu reinigenden Abluft von angesaugter Spülluft durchströmt und das gasförmige Lösungsmittel dabei herausgespült. Das Gemisch aus Spülluft und gasförmigem Lösungsmittel wird durch die Vakuumpumpe aus dem Innern der Adsorptionskammer solange abgesaugt, bis das gesamte Lösungsmittel aus den Kapillaren des Adsorbens herausdiffundiert ist. Am Ende der Desorptionsphase ist die betreffende Adsorptionskammer für die erneute Umschaltung in die Adsorptionsphase bereit.

Das während der Desorption aus dem Adsorbens herausgetriebene, gasförmige Lösemittel kann auf einfache Weise durch Abkühlung verflüssigt werden, sodaß es für eine Wiederverwendung zur Verfügung steht.

Das indirekte Einbringen der Desorptionswärme in die Adsorptionskammern mittels von einem Heizmedium durchströmten Wärmetauschern bewahrt das Adsorbens vor örtlicher Überhitzung und erlaubt das Desorbieren unterhalb der Zersetzungstemperatur des Lösungsmittels, sodaß dieses chemisch unverändert zurückgewonnen werden kann. Der schonende Desorptionsprozeß wird zusätzlich von dem angelegten Vakuum und den durch das Adsorbens geleiteten Spülluftstrom unterstützt. Die erfindungsgemäße Vorrichtung kann somit bei optimalen Prozeßparametern mit geringstmöglichem Energieverbrauch betrieben werden. Die technisch und energetisch aufwendige Erzeugung von Dampf für die Regenerierung entfällt vollständig.

In vorteilhafter Weiterbildung der Erfindung sind die Wärmetauscher als Plattenwärmetauscher ausgebildet und werden von demselben flüssigen Medium, vorzugsweise Wasser, durchströmt. Das somit gleichzeitig als Kühl- und als Heizmedium dienende Wasser läßt sich auf einfache Weise aufheizen und ebensogut kühlen. Die Verwendung des gleichen Mediums sowohl zur Kühlung als auch zur Aufheizung der in den Adsorptionskammern angeordneten Wärmetauschern ist eine Voraussetzung für ein problemloses Umschalten zwischen Heizbetrieb und Kühlbetrieb, da in der Übergangsphase eine gewisse Vermischung zwischen Heiz- und Kühlmedium kaum vermieden werden kann.

Zur wechselseitigen Aufheizung und Kühlung des Adsorbens ist zweckmäßigerweise ein Warmwasser-Kreislauf, bestehend aus Heizwasser-Behälter, Heizwasser-Pumpe, Heizwasser-Vorlaufleitungen und Heizwasser-Rücklaufleitungen, ferner ein Kühlwasser-Kreislauf, bestehend aus Kühlwasser-Behälter, Kühlwasser-Pumpe, Kühlwasser-Vorlaufleitungen und Kühlwasser-Rücklaufleitungen vorgesehen. Je ein unabhängig zu betätigendes Heizwasser-Vorlaufventil, Heizwasser-Rücklaufventil, Kühlwasser-Vorlaufventil und Kühlwasser-Rücklaufventil für jeden vorhandenen Wärmetauscher in den Adsorptionskammern gestattet die abwechselnde Einschaltung der Wärmetauscher in den Warmwasser-Kreislauf während der Desorptionsphase bzw. in den Kaltwasser-Kreislauf während der Adsorptionsphase.

Zur Beheizung des Heizwasser-Behälters eignet sich insbesondere eine elektrische Widerstandsheizung. Der Kühlwasser-Behälter wird am besten durch ein elektrisch angetriebenes Kälteaggregat gekühlt. Dies hat den Vorteil, daß die gesamte Vorrichtung einschließlich Kühlung und Aufheizung des Adsorbens mit einer einzigen Energieart, nämlich elektrischem Strom, auskommt und deshalb problemlos installiert werden kann.

In vorteilhafter Weitergestaltung der erfindungsgemäßen Vorrichtung ist hinter der Vakuumpumpe ein Kondensator angeordnet, der zur Verflüssigung des während der Desorptionsphase aus dem Adsorbens ausgetriebenen Lösungsmittels dient.

Bei einer besonders bevorzugten Ausführung kühlt das Kälteaggregat nicht nur den Kühlwasser-Behälter, sondern über einen zweiten Kältemittel-Kreislauf zusätzlich den Kondensator. Das Kälteaggregat ist hierbei an zwei getrennten Kühlungsprozessen beteiligt und wird somit doppelt ausgenutzt.

Das im Kondensator wieder flüssig gewordene Lösungsmittel wird zweckmäßigerweise über einen nachgeschalteten Zyklonabscheider vom Spülluftstrom getrennt, sodaß es in einem Behälter gesammelt und einer Wiederverwendung zugeführt werden kann.

Da eine vollständige Abtrennung des Lösungsmittels aus dem Spülluftstrom nicht möglich ist, wird die noch mit einem geringfügigen Rest von Lösungsmittel beladene Spülluft vorteilhaft aus dem Zyklonabscheider ab- und in den Abluftkanal geleitet. Sie vermischt sich dort mit frischer Prozeßabluft und wird der gerade aktiven Adsorptionskammer zugeführt. Jegliche Emission auch nur von Lösungsmittel-Resten wird somit vermieden.

Ein Ausführungsbeispiel der Erfindung wird nachstehend anhand der einzigen beigefügten Zeichnung näher erläutert. Die Darstellung zeigt eine Vorrichtung zur kontinuierlichen Abtrennung und Wiedergewinnung eines Lösungsmittels aus lösungsmittelhaltiger Abluft im Prinzip.

Die bei einem Prozeß anfallende lösungsmittelhaltige Abluft A + L wird von einem Gebläse 1 angesaugt und über einen Abluftkanal 2 in eine von zwei abwechselnd betriebenen Desorptionskammern 3, 3' geleitet. Vor und hinter den Adsorptionskammern 3, 3' sind jeweils Einlaßklappen 4, 4' und Auslaßklappen 4a, 4a' angeordnet. Die Adsorptionskammern 3, 3' enthalten jeweils ein als Aktivkohlebett ausgebildetes Adsorbens 6, 6'. Innerhalb der mit dem Adsorbens 6, 6' angefüllten Adsorptionskammern 3, 3' sind Wärmetauscher 7, 7' angeordnet, welche als Plattenwärmetauscher ausgebildet sind. Jeder dieser Wärmetauscher 7, 7' läßt sich in einen Warmwasser-Kreislauf und einen Kühlwasser-Kreislauf einschalten.

Der Warmwasser-Kreislauf besteht aus einem Heizwasser-Behälter 8, der durch eine elektrische Widerstandheizung 9 beheizt ist, einer Heizwasser-Pumpe 10, doppelt ausgeführten Heizwasser-Vorlaufleitungen 11, 11' sowie ebenfalls doppelt ausgebildeten Heizwasser-Rücklaufleitungen 12, 12'. In den Heizwasser-Vorlaufleitungen 11, 11' sind jeweils vor den Wärmetauschern 7, 7' Heizwasser-Vorlaufventile 13, 13' angeordnet. In die Heizwasser-Rücklaufleitungen 12, 12' sind für jeden Wärmetauscher 7, 7' getrennte Heizwasser-Rücklaufventile 14, 14' eingebaut.

Der Kühlwasser-Kreislauf besteht aus einem Kühlwasser-Behälter 15, einer Kühlwasser-Pumpe 16, Kühlwasser-Vorlaufleitungen 17, 17' und Kühlwasser-Rücklaufleitungen 18, 18'. In den Kühlwasser-Vorlaufleitungen 17, 17' sind Kühlwasser Vorlaufventile 19, 19' und in den Kühlwasser-Rücklaufleitungen 18, 18' Kühlwasser-Rücklaufventile 20, 20' angeordnet.

An den Adsorptionskammern 3, 3' sind jeweils Regelventile 21, 21' vorgesehen, durch die Umgebungsluft eindringt und durch das Adsorbens 6, 6' entgegen der Strömungsrichtung der zu reinigenden Abluft strömen kann. Eine Vakuumpumpe 22 dient zur Erzeugung eines Grobvakuums in den Adsorptionskammern 3, 3' während der Desorptionsphase. Beide Adsorptionskammern 3, 3' sind über Absperrventile 5, 5' an eine gemeinsame Unterdruckleitung 23 angeschlossen. Hinter der Vakuumpumpe 22 ist ein Kondensator 24 zur Verflüssigung des während der Desorptionsphase durch die Unterdruckleitung 23 aus den Adsorptionskammern 3, 3' abgesaugten Lösungsmittels angeordnet. Dem Kondensator 24 ist ein Zyklonabscheider 25 nachgeschaltet. Eine Gasrückführleitung 26 führt vom Zyklonabscheider 25 in den Abluftkanal 2. Das untere Ende des Zyklonabscheiders 25 mündet in einen Trennbehälter 27 zur Trennung von Wasser und Lösungsmittel. An den Trennbehälter 27 schließt sich ein Kleinadsorber 28 zur Abtrennung von Lösungsmittel-Resten an.

Ein elektrisch angetriebenes Kälteaggregat 29 kühlt über einen ersten Kältekreislauf 30 das Kühlwasser im Kühlwasser-Behälter 15 und über einen zweiten Kältekreislauf 31 den Kondensator 24.

Die Adsorptionskammern 3, 3' sind ferner über ihre Auslaßklappen 4, 4' mit einer gemeinsamen Sammelleitung 32 für gereinigte Abluft A verbunden. Ein Abluftmeßgerät 33 in der Sammelleitung 32 mißt die in der gereinigten Abluft A noch vorhandene Lösungsmittel-Konzentration. Alle Aggregate und Stellglieder werden von einer (nicht dargestellten) Steuerelektronik kontrolliert.

Es sei angenommen, daß die erste Adsorptionskammer 3 in der Adsorptionsphase betrieben wird, während sich gleichzeitig die zweite Adsorptionskammer 3' in der Desorptionsphase befindet. Hierzu sind die Einlaßklappe 4 und die Auslaßklappe 5 der ersten Adsorptionskammer 3 geöffnet, während die Einlaßklappe 4' und die Auslaßklappe 5' an der zweiten Adsorptionskammer 3' geschlossen sind.

Die verdunstestes Lösungsmittel L enthaltende Abluft A + L wird vom Gebläse 1 angesaugt und über den Abluftkanal 2 in das Innere der Adsorptionskammer 3 gedrückt. Beim Durchströmen des Adsorbens 6 wird das Lösungsmittel in den Kapillaren der Aktivkohle adsorbiert. Die so gereinigte Abluft A verläßt die Adsorptionskammer 3 und gelangt über die Sammelleitung 32 ins Freie.

Der innerhalb der Adsorptionskammer 3 angeordnete Wärmetauscher 7 ist während der Adsorptionsphase in den Kühlwasser-Kreislauf eingeschaltet. Vom Kälteaggregat 29 gekühltes Kühlwasser gelangt vom Kühlwasser-Behälter 15 durch die Kühlmittel-Vorlaufleitung 17 und das geöffnete Kühlwasser-Vorlaufventil 19 in den Wärmetauscher 7 und fließt über das geöffnete Kühlwasser-Rücklaufventil 20 und die Kühlwasser-Rücklauflei tung 18 zurück. Die Kühlung des Adsorbens 6 fördert den Adsorptionsprozeß.

Zur gleichzeitigen Desorption des beladenen Adsorbens 6' ist an der zweiten Adsorptionskammer 3' das Absperrventil 5' geöffnet. Die Vakuumpumpe 22 erzeugt ein Grobvakuum im Innern der Adsorptionskammer 3'. Durch das geöffnete Regelventil 21' strömt ein konstanter, genau definierter Volumenstrom von Umgebungsluft in das Innere der Adsorptionskammer 3' ein und wird als Spülluft durch das Adsorbens 6' gesaugt. Das adsorbierte Lösungsmittel wird aus dem Adsorbens 6' ausgetrieben und gelangt über das offene Absperrventil 5' zusammen mit der Spülluft durch die Unterdruckleitung 23 in den Kondensator 24.

Während der Desorptionsphase ist der Wärmetauscher 7' in den Heizwasser-Kreislauf eingeschaltet. Von der elektrischen Widerstandsheizung 9 erhitztes Heizwasser wird von der Heizwasser-Pumpe 10 aus dem Heizwasser-Behälter 8 abgepumpt und gelangt über die Heizwasser-Vorlaufleitung 11' und das geöffnete Heizwasser-Vorlaufventil 13' in den Wärmetauscher 7'. Über das geöffnete Heizwasser-Rücklaufventil 14' fließt das abgekühlte Heizwasser durch die Heizwasser-Rücklaufleitung 12' in den Heizwasser-Behälter 8 zurück. Die Aufheizung des Adsorbens führt zu einer schnelleren Verdampfung des Lösungsmittels, dessen Siedepunkt durch das angelegte Vakuum herabgesetzt ist. Die gleichzeitig durch das Adsorbens 6' geleitete Spülluft unterstützt den Desorptionsprozeß.

Das Kälteaggregat 29 kühlt nicht nur das Kühlwasser für die aktive Adsorptionskammer 3, sondern kühlt gleichzeitig mittels seines zweiten Kältemittel-Kreislaufs 31 den Kondensator 24, in dem das desorbierte Lösungsmittel aus der Gasphase wieder verflüssigt wird. Das wieder flüssig gewordene Lösungsmittel wird im nachgeschalteten Zyklonabscheider 25 vom Spülluftstrom getrennt und in dem Trennbehälter 27, zusammen mit dem ebenfalls im Spülluftstrom enthaltenen Wasser, gesammelt. Da ein vollständiges Auskondensieren des Lösungsmittels kaum möglich ist, wird die noch mit geringen Lösungsmittel-Resten beladene Spülluft aus dem Zyklonabscheider 25 über die Gasrückführleitung 26 in den Abluftkanal 2 rückgeführt und dort der zu reinigenden Abluft A + L beigemengt. Im Trennbehälter 27 wird das Lösungsmittel von dem mitkondensierten Wasser getrennt. Das Wasser wird mittels des Kleinadsorbers 28 von den letzten Lösungsmittel-Resten befreit. Das im Trennbehälter 27 gesammelte Lösungsmittel liegt in so reiner Form vor, daß es einer Wiedergewinnung zugeführt werden kann.

Die erste Adsorptionskammer 3 wird solange in der Adsorptionsphase betrieben, bis das Abluftmeßgerät 33 der Sammelleitung 32 einen Anstieg der Lösungsmittel-Konzentration in der gereinigten Abluft registriert. Rechtzeitig vor Erreichen der maximal zulässigen Beladung des Adsorbens 3 wird auf die zuvor in der beschriebenen Weise regenerierte Adsorptionskammer 3' umgeschaltet. Hierzu werden zunächst die Einlaßklappe 4' und die Auslaßklappe 4a' an der zweiten Adsorptionskammer 3' geöffnet und dann die Einlaßklappe 4 und die Auslaßklappe 4a an der ersten Adsorptionskammer 3 geschlossen. Erst dann wird die zu reinigende Abluft A + L über den Abluftkanal 2 in das Innere der Adsorptionskammer 3' und durch das Adsorbens 6' geleitet. Während der damit begonnenen Adsorptionsphase wird nun der Wärmetauscher 7'

der Adsorptionskammer 3' in den Kühlwasser-Kreislauf eingeschaltet. Gleichzeitig beginnt für die andere Adsorptionskammer 3 die Desorptionsphase, während der der betreffende Wärmetauscher 7 in den Heizwasser-Kreislauf eingeschaltet wird. Da für jeden Wärmetauscher 7 bzw. 7' jeweils eine eigene Heizwasser-Vorlaufleitung 11, 11', eine Heizwasser-Rücklaufleitung 12, 12', eine Kühlwasser-Vorlaufleitung 17, 17' und eine Kühlwasser-Rücklaufleitung 18, 18' sowie unabhängig zu betätigende Heizwasser-Vorlaufventile 13, 13', Heizwasser-Rücklaufventile 14, 14', Kühlwasser-Vorlaufventile 19, 19' und Kühlwasser-Rücklaufventile 20, 20' vorhanden sind, ist eine problemlose wechselseitige Umschaltung zwischen Heizen und Kühlen möglich.

## Zusammenstellung der Bezugsziffern

A Abluft
L Lösungsmittel
1 Abluftgebläse
2 Abluftkanal
3, 3' Adsorptionskammern
4, 4' Einlaßklappen
4a, 4a' Auslaßklappen
5, 5' Absperrventile
6, 6' Adsorbens
7, 7' Wärmetauscher (in 3, 3')
8 Heizwasser-Behälter
9 Widerstandsheizung (von 8)
10 Heizwasser-Pumpe
11, 11' Heizwasser-Vorlaufleitungen
12, 12' Heizwasser-Rücklaufleitungen
13, 13' Heizwasser-Vorlaufventile
14, 14' Heizwasser-Rücklaufventile
15 Kühlwasser-Pumpe
17, 17' Kühlwasser-Vorlaufleitungen
18, 18' Kühlwasser-Rücklaufleitungen
19, 19' Kühlwasser-Vorlaufventile
20, 20' Kühlwasser-Rücklaufventile
21, 21' Regelventile
22 Vakuumpumpe
23 Unterdruckleitung
24 Kondensator
25 Zyklonabscheider
26 Gasrückführleitung
27 Trennbehälter
28 Kleinadsorber
29 Kälteaggregat
30 erster Kältemittel-Kreislauf (von 29)
31 zweiter Kältemittel-Kreislauf (von 29)
32 Sammelleitung
33 Abluftmeßgerät

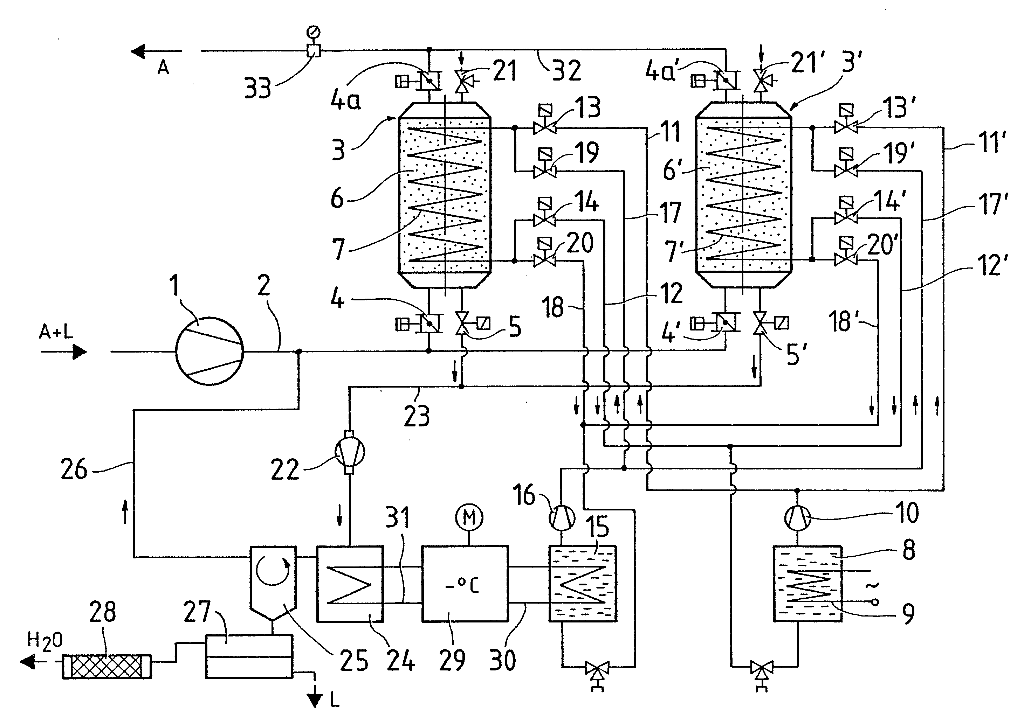

## Ansprüche

1. Vorrichtung zur kontinuierlichen Abtrennung und Wiedergewinnung eines Lösungsmittels aus lösungsmittelhaltiger Abluft, mit
- wenigstens zwei abwechselnd betriebenen Adsorptionskammern (3, 3'), in denen ein Adsorbens (6, 6') während einer Adsorptionsphase von der lösungsmittelhaltigen Abluft durchströmt und während einer Desorptionsphase regeneriert wird;
- einem gemeinsamen Abluftkanal (2);
- einem im Abluftkanal (2) angeordneten Abluftgebläse (1), das die Abluft ansaugt und während der Adsorptionsphase durch die Absorptionskammern (3, 3') fördert;
- einer Vakuumpumpe (22) zur Erzeugung eines Unterdrucks in den Adsorptionskammern (3, 3') während der Desorptionsphase;
- Einrichtungen zur Aufheizung bzw. Kühlung des Adsorbens (6,6');
gekennzeichnet durch
- in den Adsorptionskammern (3, 3') angeordneten Wärmetauschern (7, 7'), die während der Adsorptionsphase von einem gekühlten Medium und während der Desorptionsphase von einem erwärmten Medium durchströmt sind;
- an den Adsorptionskammern (3, 3') vorgesehenen Regelventilen (21, 21'), durch die während der Desorptionsphase infolge des angelegten Vakuums Umgebungsluft eindringt und das Absorbens (6, 6') entgegen der Strömungsrichtung der zu reinigenden Abluft durchströmt.

2. Vorrichtung nach Anspruch 1, dadurch gekennzeichnet, daß die Wärmetauscher (7, 7') stets von demselben flüssigen Medium durchströmt werden.

3. Vorrichtung nach Anspruch 2, dadurch gekennzeichnet, daß das Medium Wasser ist.

4 Vorrichtung nach einem der Ansprüche 1 bis 3, dadurch gekennzeichnet, daß die Wärmetauscher (7, 7') als Plattenwärmetauscher ausgebildet sind.

5. Vorrichtung nach Anspruch 3 oder 4, gekennzeichnet, durch
- einen Warmwasser-Kreislauf, bestehend aus Heizwasser-Behälter (8), Heizwasser-Pumpe (10), Heizwasser-Vorlaufleitungen (11, 11') und Heizwasser-Rücklaufleitungen (12, 12');
- einen Kühlwasser-Kreislauf, bestehend aus Kühlwasser-Behälter (15), Kühlwasser-Pumpe (16), Kühlwasser-Vorlaufleitungen (17, 17') und Kühlwasser-Rücklaufleitungen (18, 18');
- je ein unabhängig zu betätigendes Heizwasser-Vorlaufventil (13, 13'), Heizwasser-Rücklaufventil (14, 14'), Kühlwasser-Vorlaufventil (19, 19') und Kühlwasser-Rücklauf ventil (20. 20') für jeden vorhandenen Wärmetauscher (7,7') in den Adsorptions-Kammern (3, 3').

6. Vorrichtung nach Anspruch 5, dadurch gekennzeichnet, daß der Heizwasser-Behälter (8) durch eine elektrische Widerstandsheizung (9) beheizt wird.

7. Vorrichtung nach Anspruch 5 oder 6, dadurch gekennzeichnet, daß der Kühlwasser-Behälter (15) durch ein elektrisch angetriebenes Kälteaggregat (29) gekühlt wird.

8. Vorrichtung nach einem der Ansprüche 1 bis 7, gekennzeichnet durch einen hinter der Vakuumpumpe (22) angeordneten Kondensator (24) zur Verflüssigung des während der Desorptionsphase aus dem Adsorbens (6, 6') ausgetriebenen Lösungsmittels.

9. Vorrichtung nach Anspruch 7 und Anspruch 8, dadurch gekennzeichnet, daß das Kälteaggregat (29) einen zweiten Kältemittel-Kreislauf (31) aufweist, welcher den Kondensator (24) kühlt.

10. Vorrichtung nach Anspruch 8 oder 9, gekennzeichnet durch einen dem Kondensator (24) nachgeschalteten Zyklonabscheider (25).

11. Vorrichtung nach Anspruch 10, gekennzeichnet durch eine Gasrückführleitung (26) zwischen dem Zyklonabscheider (25) und dem Abluftkanal (2).

EP 0 350 677 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE-A-3 139 781 (N. UDDEHOLM)<br>* Figuren 1,2 * | 1 | B 01 D 53/04 |
| A | | 2-11 | |
| X | EP-A-0 018 478 (SIEMENS)<br>* Figuren * | 1 | |
| A | | 2-11 | |
| A | US-A-3 796 023 (L. RADULY)<br>* Figuren; Spalte 1, Zeile 56 - Spalte 2, Zeile 13 * | 1 | |
| A | US-A-4 056 369 (H. QUACKENBUSH) | | |
| A | US-A-4 039 306 (J. TAYLOR) | | |
| A | GB-A-2 132 910 (LOHMANN GmbH) | | |

RECHERCHIERTE SACHGEBIETE (Int. Cl.4)

B 01 D

Der vorliegende Recherchenbericht wurde für alle Patentansprüche erstellt

| Recherchenort | Abschlußdatum der Recherche | Prüfer |
|---|---|---|
| DEN HAAG | 02-11-1989 | KANOLDT W.W. |